# EUROPÄISCHE PATENTSCHRIFT

(11) **EP 0 656 299 B1**
(45) Veröffentlichungstag und Bekanntmachung des Hinweises auf die Patenterteilung: **03.02.1999**
(21) Anmeldenummer: 94118272.7
(22) Anmeldetag: 21.11.1994
(51) Int. Cl.: B65D 77/06

(54) **Metallbehälter für den Transport und die Lagerung von Flüssigkeiten**
Metallic container for transporting and storing liquids
Récipient métallique pour le transport et le stockage de liquides

(30) Priorität: 04.12.1993 DE 4341338
(43) Veröffentlichungstag der Anmeldung: 07.06.1995
(73) Patentinhaber: PROTECHNA S.A., 1701 Fribourg (CH)
(72) Erfinder: Schütz, Udo, D-56242 Selters /Ww. (DE)
(74) Vertreter: Pürckhauer, Rolf, Dipl.-Ing.

(56) Entgegenhaltungen:
- EP-A- 0 509 228
- EP-A- 0 633 200
- DE-B- 2 947 603
- DE-C- 4 204 010
- DE-U- 9 002 099

## Beschreibung

Die Erfindung betrifft einen Metallbehälter für den Transport und die Lagerung von Flüssigkeiten, der aus einem Mantel, einem Bodenteil mit einem Ablaufboden und einer Entnahme- und Spülöffnung zum Anschließen einer Entnahmearmatur und aus einem Deckel aus Blech zusammengeschweißt ist und auf einer Palette steht, wobei der Ablaufboden des Bodenteils des Behälters mit einem leichten Gefälle von dem rückwärtigen Rand zum vorderen Rand des Bodenteils, an dem ein Stutzen zum Anschluß eines Entnahme- und Spülhahns angeordnet ist, und mit einem Gefälle von den beiden Seitenrändern zur Bodenmitte hin verläuft und eine mittige, flache Ablaufrinne bildet, und der Behälter in einer als Palette ausgebildeten, flachen Bodenwanne aus Blech steht, die dem Ablaufboden des Behälters angepaßte Bodenwanne Versteifungssicken aufweist, deren Gründe in einer gemeinsamen horizontalen Ebene liegen und die in dem Boden der Wanne nach unten offene oder Kammern bilden, die flache Bodenwanne einen nach unten gezogenen, äußeren Stützrand aufweist, der einen hohlen Stützkragen bildet, und die Bodenwanne auf einem Palettenrahmen aus Metall, Kunststoff oder Holz befestigt ist.

Aus der EP 0 509 228 A2 bekannte Metallbehälter dieser Gattung haben ein hohes Leergewicht, das auf der für eine korrosionsfeste Behälterausführung vorgeschriebenen Wandstärke von 2,5 bis 3,0 Millimetern beruht.

Der Erfindung liegt die Aufgabe zugrunde, die Konstruktion des gattungsgemäßen Metallbehälters im Hinblick auf eine Reduzierung des Leergewichts zu verbessern.

Diese Aufgabe ist erfindungsgemäß gelöst durch einen Metallbehälter mit den Merkmalen des Patentanspruchs 1.

Die Unteransprüche beinhalten vorteilhafte und zweckmäßige Weiterbildungen der Erfindung.

Die doppelwandige Konstruktion des Behälters mit Innenblechen aus Edelstahl als Korrosionsschutz und Außenblechen aus Normalstahl, die die Stützfunktion der Seitenwände und des Bodens des Behälters ausüben, erlaubt eine Reduzierung der für korrosionsfeste, einwandige Blechbehälter vorgeschriebenen Wandstärke von 2,5 bis 3 Millimetern um bis zu 50% auf 1,2 bis 1,5 Millimeter, so daß eine erhebliche Materialeinsparung und eine Reduzierung des Leergewichts des Behälters erreicht werden. Der Blechbehälter weist in Verbindung mit einem Metallgittermantel eine große Stabilität auf, die ein höchstes Maß an Sicherheit des Behälters gegen außere Schlag- und Stoßbeanspruchungen und eine mehrfache Stapelbarkeit des Behälters gewährleistet. Das wirtschaftliche Herstellungsverfahren für den Blechbehälter ermöglicht eine Fertigung preisgünstiger Behälter mit hoher Qualität.

Die Erfindung ist nachstehend anhand von Zeichnungen erläutert, die folgendes darstellen:
- Fig. 1: eine perspektivische Darstellung eines Behälters aus Blech mit einem Gittermantel und einer als Bodenwanne ausgebildeten Palette,
- Fig. 2: einen Längsschnitt und
- Fig. 3: einen Querschnitt durch den Bodenbereich des Behälters nach Linie III-III der Fig. 2 in vergrößerter Darstellung,
- Fign. 4 bis 6: drei Verfahrensstufen bei der Herstellung des Blechmantels des Behälters,
- Fign. 7 und 8: die Verbindung des Blechmantels mit dem Bodenteil und dem Deckel aus Blech durch eine Rollennahtschweißung,
- Fig. 9: eine schematische Schnittdarstellung einer Stützform zum Glätten der Übergänge zwischen Mantel und Boden sowie Mantel und Deckel des Behälters und
- Fig. 10: einen Deckelbereich eines selbsttragend ausgebildeten Behälters.

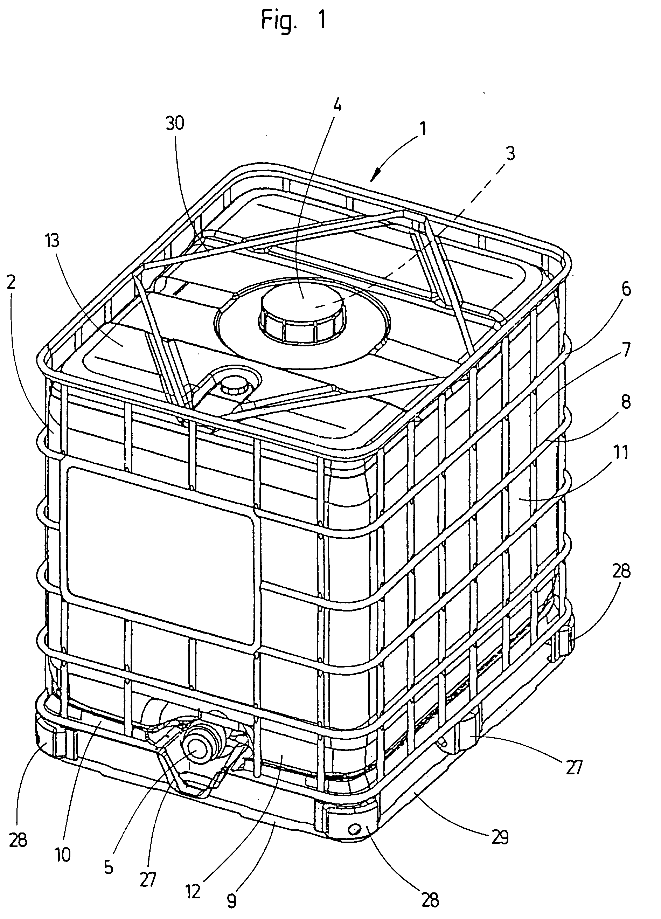

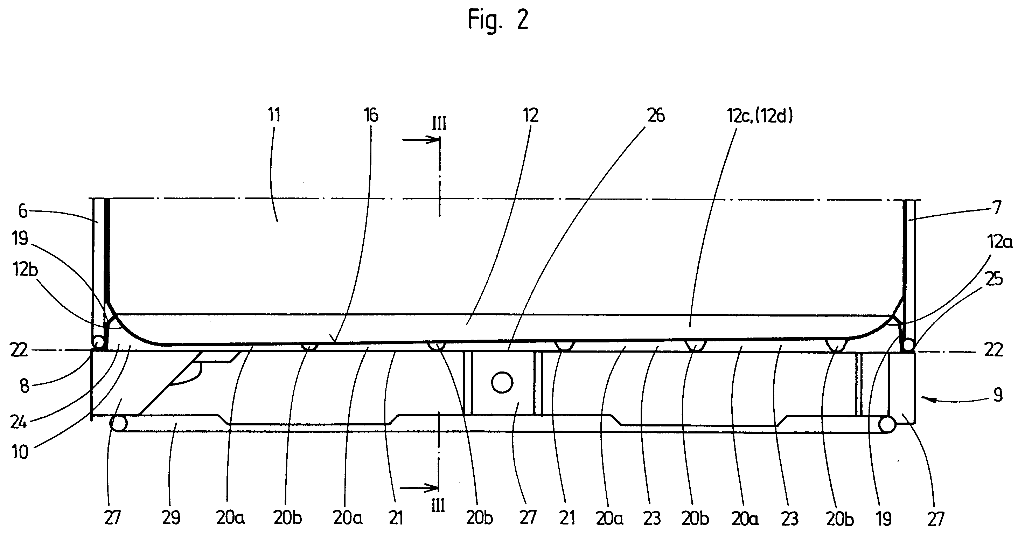

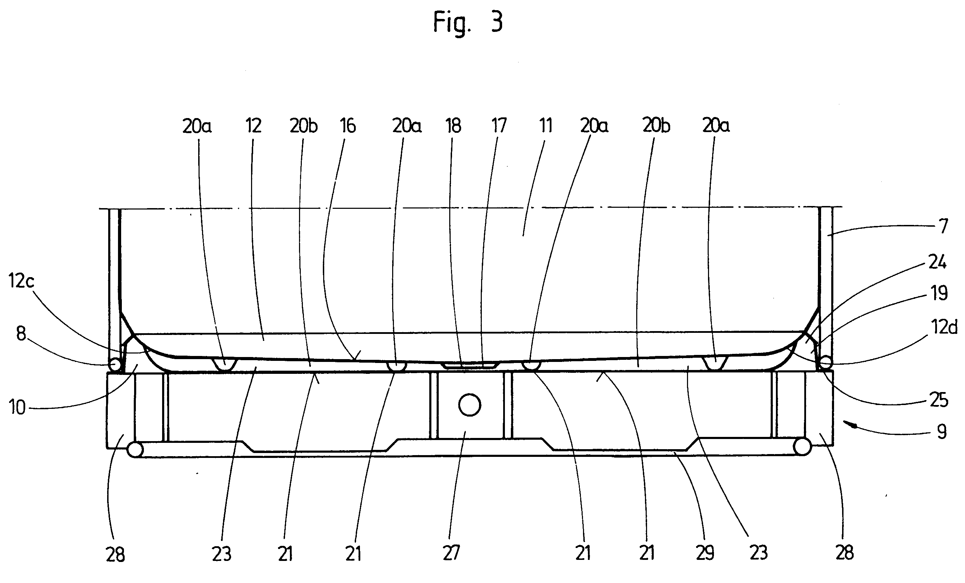

Der als Ein-und Mehrwegbehälter verwendete Blechbahälter 1 mit rechteckigem Grundriß und abgerundeten Ecken 2 nach den Fign. 1 bis 3 für den Transport und die Lagerung von Flüssiggut unterschiedlicher Art weist einen mit einem Deckel 4 verschließbaren Einfüllstutzen 3 und einen weiteren Stutzen 5 im Bodenbereich zum Anschluß eines Entnahme- und Spülhahns, einen äußeren Gittermantel 6 aus sich kreuzenden senkrechten und waagrechten Gitterstäben 7, 8 aus Metall sowie eine als flache Bodenwanne 10 aus Blech ausgebildete Palette 9 mit euronormgerechten Längen- und Breitenabmessungen zur formschlüssigen Aufnahme des Blechbehälters 1 auf.

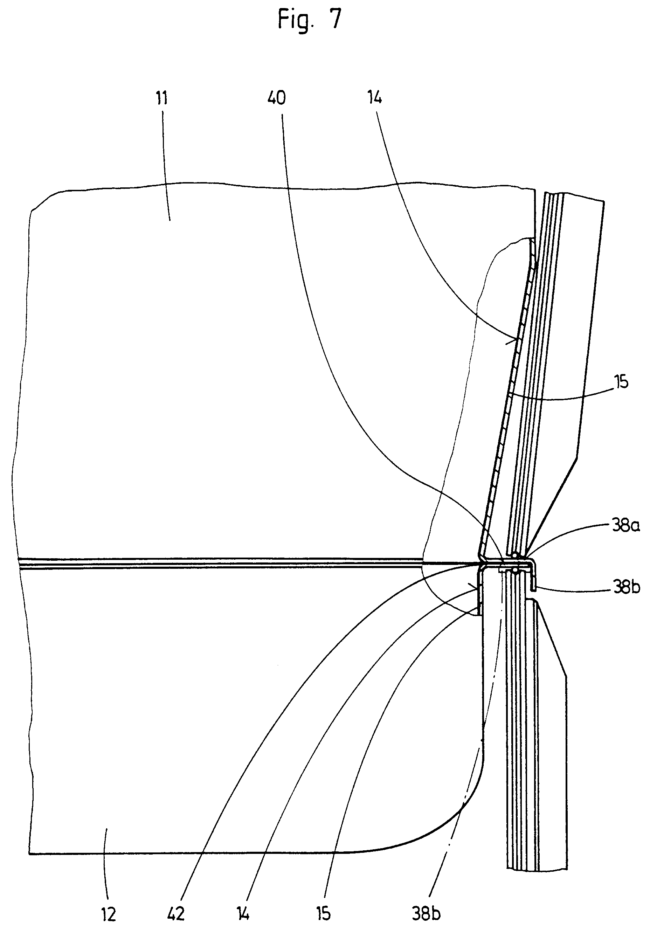

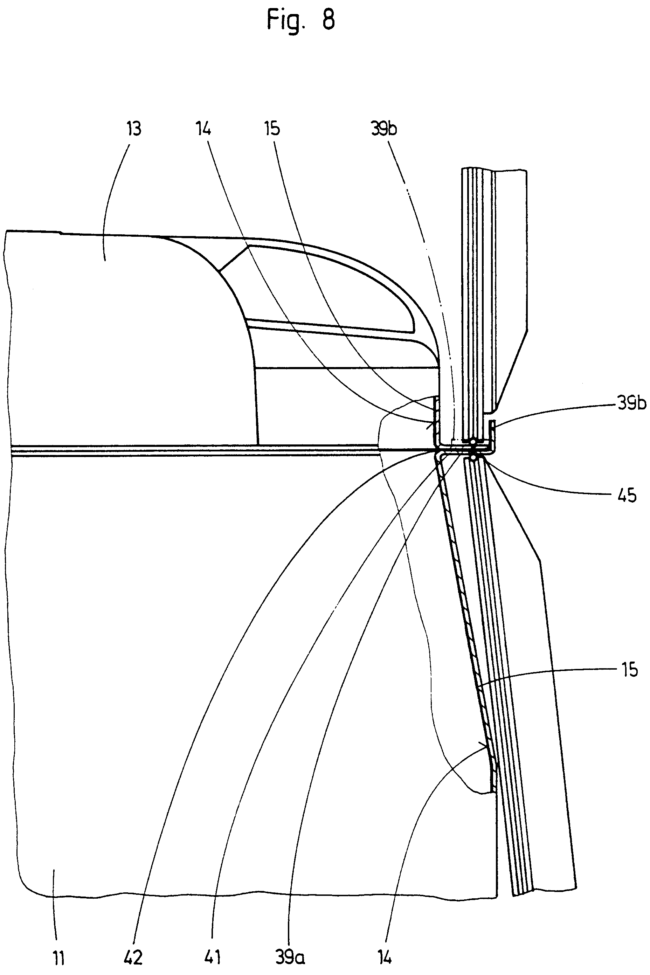

Der Blechbehälter 1 ist aus einem Mantel 11, einem Bodenteil 12 und einem Deckel 13 zusammengeschweißt. Mantel 11, Bodenteil 12 und Deckel 13 des in Kompositbauweise doppelwandig erstellten Behälters 1 bestehen aus einem dünnen Innenblech 14 aus korrosionsfestem Edelstahl und einem Außenblech 15 aus Normalstahl, dessen Stärke größer ist als diejenige des Innenblechs 14 (Fign. 7 und 8).

In Abweichung von der beschriebenen Ausführung können Mantel 11, Bodenteil 12 und Deckel 13 des Behälters 1 auch in Kompositbauweise jeweils aus einem Innenblech aus Edelstahl, einem Mittelblech aus Normalstahl und einem Außenblech aus Edelstahl gefertigt sein. Weiterhin besteht die Möglichkeit, den Behälter 1 aus plattiertem Blech mit einer dünnen Innenschicht aus Edelstahl und einer dickeren Außenschicht aus Normalstahl zu fertigen.

Das Bodenteil 12 des Behälters 1 weist einen Ablaufboden 16 auf, der mit einem leichten Gefälle von dem rückwärtigen Rand 12a zum vorderen Rand 12b des Bodenteils 12 verläuft und der außerdem von den beiden Seitenrändern 12c, 12d des Bodenteils 12 leicht zur Bodenmitte hin abfällt. Auf diese Weise bildet der Boden 16 des Bodenteils 12 des Behälters 1 eine flache, zu dem Stutzen 5 in dem vorderen Rand 12b zum Anschluß eines Entnahme- und Spülhahns, vorzugsweise eines Kugel- oder Klappenhahns, leicht geneigte Ablaufrinne 17.

Die in der Neigung dem Ablaufboden 16 des Blechbehälters 1 angepaßte, aus Blechmaterial tiefgezogene Bodenwanne 10 der Palette 9 mit einer der Ablaufrinne 17 des Behälters 1 entsprechenden flachen Mittelrinne 18 weist einen nach unten gezogenen äußeren Stützrand 19 und in Richtung der und quer zur Mittelrinne 18 verlaufende Versteifungssicken 20a, 20b auf, deren Gründe 21 in einer gemeinsamen Ebene 22-22 liegen. Durch die Versteifungssicken 20a, 20b und die Mittelrinne 18 werden in der Bodenwanne 10 nach unten offene Kammern 23 gebildet, und der äußere Stützrand 19 formt an der Bodenwanne 10 einen umlaufenden, hohlen Stützkragen 24. Die derart gestaltete Bodenwanne 10 der Palette 9 zeichnet sich durch ein gutes Dämpfungsvermögen und eine hohe Steifigkeit sowohl bei einer Schwingungsbeanspruchung durch vom Transportfahrzeug übertragene Fahrschwingungen und von dem flüssigen Transportgut ausgehende Schwallschwingungen als auch bei einer äußeren Schlag- oder Stoßbeanspruchung aus, so daß der Behälter 1 den hohen Anforderungen hinsichtlich der erforderlichen Transport- und Unfallsicherheit in vollem Umfang genügt.

Von dem äußeren Stützrand 19 der Bodenwanne 10 ist ein umlaufender äußerer Randstreifen 25 abgewinkelt, der mit einer unter der Bodenwanne 10 mittig befestigten Versteifungsstrebe 26 einen Unterrahmen bildet.

Der durch den umlaufenden Stützkragen 24 der Bodenwanne 10 der Palette 9 fixierte Gittermantel 6 stützt sich mit dem unteren, waagrecht umlaufenden Gitterstab 8 oder einem unteren Abschlußprofil auf dem Randstreifen 25 der Bodenwanne 10 ab, und der Gittermantel 6 ist über den unteren, waagrechten Gitterstab 8 zusammen mit der Bodenwanne 10 sowie den Mittel- 27 und Eckfüßen 28 auf dem als Stahlrohrrahmen ausgebildeten Palettenrahmen 29 festgeschraubt.

Der Gittermantel 6 ist durch einen oberen, mit dem Gittermantel verschraubten Rahmen 30 versteift, der den Blechbehälter 1 von oben schützt.

Die Modulbauweise des als Palettenbehälter ausgebildeten Blechbehälters 1 erlaubt einen einfachen und schnellen Zusammenbau, bei Bedarf einen einfachen Austausch des Blechbehälters gegen einen Kunststoffbehälter und eine raumsparende und kostengünstige Lagerung sowie einen entsprechend kostengünstigen Transport der Bauelemente.

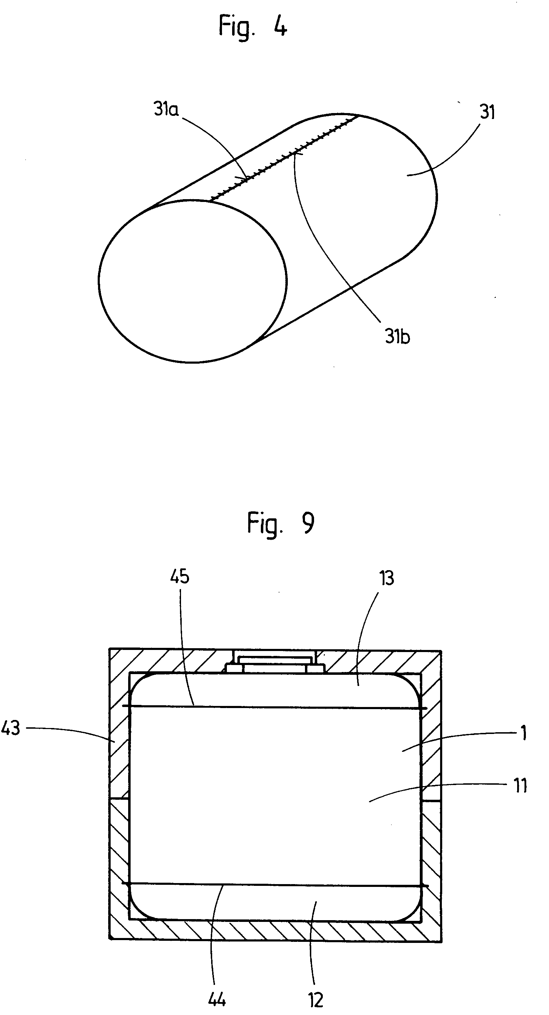

Zur Herstellung des doppelwandigen Blechmantels 11 des Behälters 1 wird ein nicht dargestellter, rechteckiger Blechzuschnitt aus einem Edelstahl- und einem Normalstahlblech zu einem Rohrkörper 31 gebogen, und anschließend werden dessen stoßende Ränder 31a, 31b z.B. auf einer Zargenschweißmaschine längsverscheißt (Fig. 4).

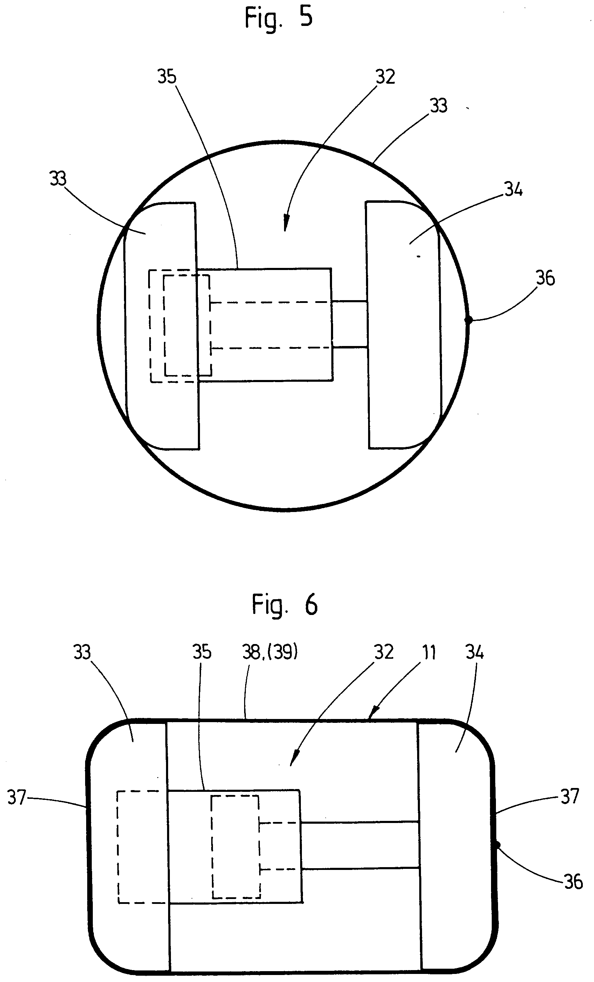

Der Rohrkörper 31 wird auf eine Reckpresse 32 aufgezogen, deren Spreizbacken 33, 34 die Form des Behälters 1 im Bereich seiner Schmalseiten haben (Fig. 5). Nach dem Aufziehen des Rohrkörpers 31 werden die Spreizbacken 33, 34 der Reckpresse 32 durch einen Druckmittelzylinder 35 auseinandergefahren (Fig. 6). Dabei nimmt der Rohrkörper 31 die Form des Blechmantels 11 an. Der Rohrkörper 31 wird derart auf die Reckpresse 32 aufgezogen, daß die Längsschweißnaht 36 auf eine der Schmalseiten 37 des Blechmantels 11 zu liegen kommt.

Anschließend werden die beiden Ränder 38, 39 des Blechmantels 11 zu Schweißrändern mit einem waagrechten und einem senkrechten Randabschnitt 38a, 38b; 39a, 39b umgekantet.

Danach wird das tiefgezogene oder gepreßte Bodenteil 12 mit einem abgekanteten waagrechten Rand 40 auf bzw. an den waagrechten Randabschnitt 38a des einen Schweißrandes des Mantels 11 paßgenau auf- bzw. angesetzt, und das Bodenteil 12 wird am Mantel 11 angeheftet (Fig. 7).

In gleicher Weise wird der tiefgezogene oder gepreßte Deckel 13 mit einem abgekanteten waagrechten Rand 41 auf bzw. an den waagrechten Randabschnitt 39a des anderen Schweißrandes des Mantels 11 paßgenau auf- bzw. angesetzt, und der Deckel 13 wird am Mantel 11 angeheftet (Fig. 8).

Bodenteil 12 und Deckel 13 werden mit dem Mantel 11 flüssigkeitsdicht verschweißt, vorzugsweise rollennahtverschweißt.

Die über die abgekanteten waagrechten Ränder 40, 11 des Bodenteils 12 und des Deckels 13 vorstehenden senkrechten Randabschnitt 38b, 39b des Behältermantels 11 werden auf die Ränder 40, 41 des Bodenteils 12 und des Deckels 13 umgelegt.

In der letzten Stufe des Fertigungsverfahrens werden die zwischen Mantel 11 und Bodenteil 12 bzw. Deckel 13 des Blechbehälters 1 gebildeten Ringspalte 42 beseitigt, die Flüssigkeitsnester bilden können, in denen sich Flüssigkeit beim Entleeren ansammelt, die beim Einsatz des Behälters in der Lebensmittelindustrie krankheitserregende Keime bilden kann.

Diese Ringspalte 42 können durch eine Auftragsschweißung geschlossen werden.

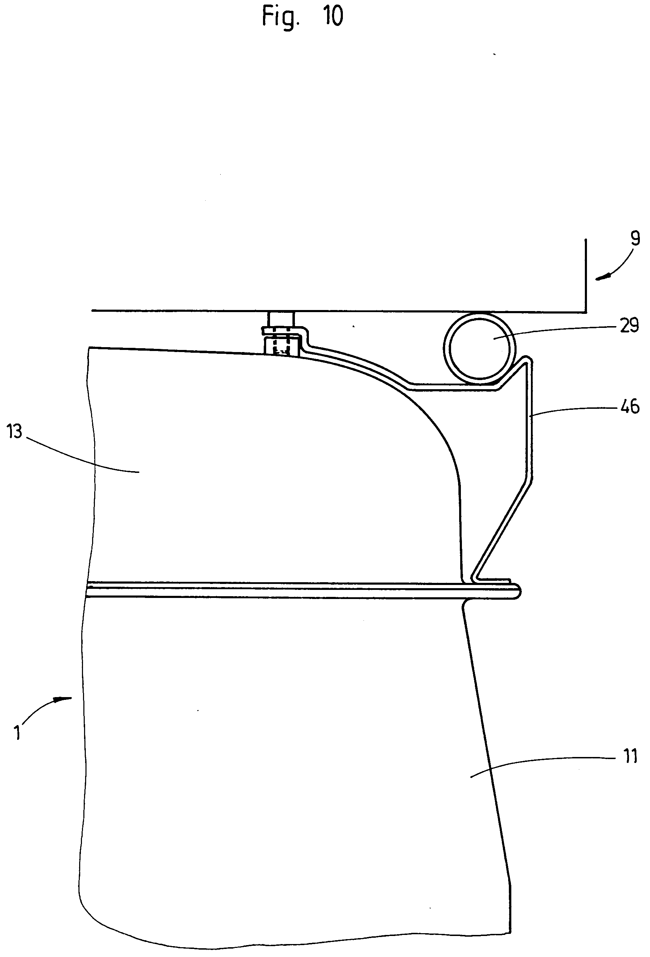

Eine andere Möglichkeit zur Beseitigung der Ringspalte 42 besteht darin, den Blechbehälter 1 aufzuweiten. Zu diesem Zweck wird der Behälter 1 in eine Stützform 43 eingebracht, die derart ausgebildet ist, daß sich bei einer hydraulischen oder pneumatischen Druckbeaufschlagung des Behälters 1 die Übergangsbereiche zwischen Mantel 11 und Bodenteil 12 sowie Mantel 11 und Deckel 13 begrenzt aufweiten können, wobei die Randabschnitte 38a, 38b, 39a, 39b des Mantels 11 und die Ränder 40, 41 des Bodenteils 12 und des Deckels 13, die nach außen vorstehen, von außen eingespannt werden, um ein Aufreißen der Boden- 44 und der Deckelschweißnaht 45 zu vermeiden (Fig. 9).

Der in dem Blechbehälter 1 herrschende erhöhte Druck wird zweckmäßig zur Dichtheitsprüfung des Behälters genutzt.

Durch eine entsprechende Verstärkung des Außenblechs 15 von Mantel 11, Bodenteil 12 und Deckel 13 kann der Behälter 1 selbsttragend ausgebildet werden, so daß der Behälter ohne Gittermantel 11 zum Einsatz kommen kann. Zu Stapelzwecken sind auf dem Behälterdeckel 13 in dessen Eckbereichen Abstützprofile 46 angebracht (Fig. 10).

Nach Bedarf besteht die Möglichkeit, den Blechbehälter 1 mit einem Innenbehälter oder einer flexiblen Innenhülle aus Kunststoff auszurüsten.

## Patentansprüche

1. Metallbehälter (1) für den Transport und die Lagerung von Flüssigkeiten, der aus einem Mantel (11), einem Bodenteil (12) mit einem Ablaufboden (16) und einer Entnahme- und Spülöffnung zum Anschließen einer Entnahmearmatur und aus einem Deckel (13) aus Blech zusammengeschweißt ist und auf einer Palette (9) steht, wobei der Ablaufboden (16) des Bodenteils (12) des Behälters (1) mit einem leichten Gefälle von dem rückwärtigen Rand (12a) zum vorderen Rand (12b) des Bodenteils (12), an dem ein Stutzen (5) zum Anschluß eines Entnahme- und Spülhahns angeordnet ist, und mit einem Gefälle von den beiden Seitenrändern (12c, 12d) zur Bodenmitte hin verläuft und eine mittige, flache Ablaufrinne (17) bildet, und der Behälter (1) in einer als Palette (9) ausgebildeten, flachen Bodenwanne (10) aus Blech steht, die dem Ablaufboden (16) des Behälters (1) angepaßte Bodenwanne (10) Versteifungssicken (20a, 20b) aufweist, deren Gründe (21) in einer gemeinsamen horizontalen Ebene (22-22) liegen und die in dem Boden der Wanne (10) nach unten offene oder geschlossene Kammern (23) bilden, die flache Bodenwanne (10) einen nach unten gezogenen, äußeren Stützrand (19) aufweist, der einen hohlen Stützkragen (24) bildet, und die Bodenwanne (10) auf einem Palettenrahmen (29) aus Metall, Kunststoff oder Holz befestigt ist, dadurch gekennzeichnet, daß der Behälter (1) aus plattiertem Blech mit einer dünnen Innenschicht aus korrosionsfestem Edelstahl und einer dickeren Außenschicht aus Normalstahl hergestellt ist.

2. Metallbehälter nach dem Oberbegriff des Anspruchs 1, dadurch gekennzeichnet, daß der Behälter (1) in Kompositbauweise aus einem Innenblech (14) aus Edelstahl und mindestens einem Außenblech (15) aus Normalstahl hergestellt ist.

3. Metallbehälter nach dem Oberbegriff des Anspruchs 1, dadurch gekennzeichnet, daß der Behälter (1) in Kompositbauweise aus einem Innenblech aus Edelstahl, einem Mittelblech aus Normalstahl und einem Außenblech aus Edelstahl gefertigt ist.

4. Metallbehälter nach einem der Ansprüche 1 bis 3, dadurch gekennzeichnet, daß der Behälter (1) selbsttragend ausgebildet ist und daß auf dem Behälterdeckel (13) vorzugsweise in dessen Eckbereichen Abstützprofile (46) zu Stapelzwecken angebracht sind.

5. Metallbehälter nach einem der Ansprüche 1 bis 4, gekennzeichnet durch einen äußeren Gittermantel (11) aus Metall.

6. Metallbehälter nach einem der Ansprüche 1 bis 5, gekennzeichnet durch einen Innenbehälter oder eine flexible Innenhülle aus Kunststoff.

## Claims

1. Metal container (1), for transporting and storing liquids, which is welded together from a jacket (11), a base section (12) with a discharge base (16) and a withdrawal and flushing opening for connecting a withdrawal fitting and from a lid (13), made from sheet metal, and standing on a pallet; the discharge base (16) of the base section (12) of the container (1) extending with a gentle gradient from the rear edge (12a) to the front edge (12b) of the base section (12), on which a connection piece (5) for connection of the withdrawal and flushing tap is arranged, and extending with a gradient from both side edges (12c, 12d) towards the middle of the base and forming a central, flat discharge channel (17), and the container (1) standing in a flat base trough (10) which is made of sheet metal and designed as a pallet (9) and the base trough (10) accommodated to the discharge base (16) of the container (1) having stiffening beads (20a, 20b) whose foundations (21) lie in a common horizontal plane (22-22) and which form, in the base of the trough (10), downwardly open or closed chambers (23), the flat base trough (10) having a downwardly drawn outer supporting edge (19), which forms a hollow supporting collar (24), and the base trough (10) being secured on a pallet frame (29), made of metal, plastic material or wood,
characterised in that
the container (1), which is made of plated sheet metal, is produced with a thin inner layer of corrosion-proof special steel and a thicker outer layer of normal steel.

2. Metal container according to the preamble to Claim 1,
characterised in that
the container (1) is produced as a composite construction made from an inner sheet (14) of special steel and at least one outer sheet (15) of normal steel.

3. Metal container according to the preamble to Claim 1
characterised in that
the container (1) is manufactured as a composite construction made from an inner sheet of special steel, an intermediate sheet of normal steel and an outer sheet of special steel.

4. Metal container according to one of the Claims 1 to 3,
characterised in that
the container (1) is designed to be self-supporting and in that the supporting profiles (46) are installed on the container lid (13) preferably in its corner regions for stacking purposes.

5. Metal container according to one of the Claims 1 to 4,
characterised by an outer lattice jacket (11) which is made of metal.

6. Metal container according to one of the Claims 1 to 5,
characterised by an inner container or a flexible inner shell which is made of plastic material.

## Revendications

1. Récipient (1) métallique pour le transport et le stockage de liquides, qui est composé d'une surface (11) latérale, d'une pièce (12) de fond comportant un fond (16) d'écoulement et une ouverture de prélèvement et de rinçage pour le raccordement d'un robinet de prélèvement et d'un couvercle (13) en tôle, qui sont assemblés par soudage, et qui se tient sur une palette (9), le fond (16) d'écoulement de la pièce (12) de fond du récipient (1) s'étendant en ayant une légère inclinaison du bord (12a) arrière au bord (12b) avant de la pièce (12) de fond, sur lequel un embout (5) est monté pour le raccordement d'un robinet de prélèvement et de rinçage, et en ayant une déclinaison des deux bords (12c,12d) latéraux au centre du fond et formant une rigole (17) d'écoulement plate centrale, et le récipient (1) se tenant dans une cuvette (10) de fond plate, réalisée en palette (9), la cuvette (10) de fond adaptée au fond (16) d'écoulement du récipient (1) comportant des moulures (20a,20b) de rigidification, dont les bases (21) sont dans un plan (22-22) horizontal commun et qui forment au fond de la cuvette (10) des chambres (23) ouvertes vers le bas ou fermées, la cuvette (10) de fond comportant un bord (19) de soutien extérieur, tiré vers le bas, qui forme un collet (24) de support creux et la cuvette (10) de fond étant fixée à un cadre (29) de palette en métal, en matière plastique ou en bois, caractérisé en ce que le récipient (1) est en tôle plaqué comportant une couche intérieure mince en acier fin résistant à la corrosion et une couche extérieure plus épaisse en acier normal.

2. Récipient métallique suivant le préambule de la revendication 1, caractérisé en ce que le récipient (1) est produit en mode de réalisation composite par une tôle (14) en acier fin et au moins une tôle (15) en acier normal.

3. Récipient métallique suivant le préambule de la revendication 1, caractérisé en ce que le récipient est produit en mode de réalisation composite par une tôle intérieure en acier fin, une tôle médiane en acier normal et une tôle extérieure en acier fin.

4. Récipient métallique suivant l'une des revendications 1 à 3, caractérisé en ce que le récipient (1) est réalisé en mode de réalisation autoportant et en ce que, à des fins d'empilage, des profilés (46) de support sont montés sur le couvercle (13) du récipient, de préférence dans ses zones d'angle.

5. Récipient métallique suivant l'une des revendications 1 à 4, caractérisé par une surface (11) latérale extérieure grillagée en métal.

6. Récipient métallique suivant l'une des revendications 1 à 5, caractérisé par un récipient intérieur ou une enveloppe intérieure souple en matière plastique.
